# EUROPÄISCHE PATENTSCHRIFT

(11) **EP 0 505 796 B1**
(45) Veröffentlichungstag und Bekanntmachung des Hinweises auf die Patenterteilung: **10.07.1996**
(21) Anmeldenummer: 92103926.9
(22) Anmeldetag: 07.03.1992
(51) Int. Cl.: H01H 50/54, H02B 1/26

(54) **Anordnung zum lösbaren Verbinden Seite an Seite von Hilfsschaltern untereinander und/oder mit einem elektromagnetischen Schaltgerät**
Arrangement for the releasable connection of auxilliary switches in rows and/or with an electromagnetic switch device
Dispositif de raccordement détachable de commutateurs auxiliaires en rangée et/ou avec un appareil de commutation électromagnétique

(30) Priorität: 25.03.1991 DE 4109715; 25.03.1991 DE 9103631 U
(43) Veröffentlichungstag der Anmeldung: 30.09.1992
(73) Patentinhaber: Klöckner-Moeller GmbH, D-53115 Bonn (DE)
(72) Erfinder: Binka, Konrad, W-5300 Bonn 1 (DE)
(74) Vertreter: Müller-Gerbes, Margot, Dipl.-Ing.

(56) Entgegenhaltungen:
- EP-A- 0 189 924
- FR-A- 2 555 803
- FR-A- 2 639 146
- US-A- 4 171 861
- US-A- 4 774 484

## Beschreibung

Die Erfindung bezieht sich auf eine Kombination von Hilfsschaltern untereinander bzw. Hilfsschalter mit einem elektromagnetischen Gerät, die zum lösbaren Verbinden Seite an Seite der Hilfsschalter untereinander und/oder mit dem elektromagnetischen Schaltgerät ausgebildet sind, wobei die Hilfsschalter ein Gehäuse mit einer als Anschlußseite an einen Hilfsschalter oder an ein elektromagnetisches Gerät ausgebildeten Seite mit einem aus dem Gehäuse des Hilfsschalters herausragenden Betätigungsnippel aufweisen und die zu der Anschlußseite parallele Gehäuseseite des Hilfsschalters als Anbauseite für den Anschluß eines weiteren Hilfsschalters mit dessen Anschlußseite ausgebildet ist und wobei das Gehäuse des Schaltgerätes an zwei einander gegenüber angeordneten zueinander parallelen Seiten in spiegelbildlicher Anordnung als Verbindungsseiten zum Anschließen der Hilfsschalter mit ihrer Anschlußseite ausgerüstet ist, und der Betätigungsnippel des Hilfsschalters durch eine Einführöffnung im Gehäuse des zu verbindenden Hilfsschalters bzw. eine Einführöffnung im Gehäuse des Schaltgerätes mit einem beweglichen Schalterorgan des Hilfsschalters bzw. Schaltgerätes in Eingriff bringbar ist und eine Verrastung der miteinander zu verbindenden Gehäuse von Hilfsschalter und Schaltgerät mittels an den Gehäusen von Hilfsschalter und Schaltgerät ausgebildeten Nuten und Stegen durch Verschieben der miteinander zu verbindenden Gehäuse parallel zu ihren Anschluß-, Anbau- und Verbindungsseiten vorgesehen ist.

Hilfsschalter dienen zum Schalten in Hilfsstromkreisen für zusätzliche Funktionen. Schaltgeräte, wie Leistungsschütze, Motorschutzschalter, werden nach Bedarf mit einem oder mehreren Hilfsschaltern aus- oder nachgerüstet. Die Schaltgeräte und Hilfsschalter werden entweder für den Aufbau oder den seitlichen Anbei an ein Schaltgerät ausgeführt. Im ersteren Fall bleibt die Breite der Schaltgeräte unverändert, die Einbautiefe wird vergrößert, im zweiten Fall wird das Schaltgerät verbreitert.

Bei der Montage von Hilfsschaltern an Schaltgeräte bzw. Hilfsschalter auf Hilfsschalter, die bereits an Schaltgeräten montiert sind, erweist sich der aus dem Gehäuse des Hilfsschalters herausragende federbelastete und bewegbare Betätigungsnippel als störend, der in Eingriff mit einem Schaltorgan in dem zu verbindenden Schaltgerät bzw. Hilfsschalter durch eine Öffnung in dem Gehäuse des zugehörigen Gerätes gebracht werden muß, wobei eine hohe Präzision dieses Eingriffes, d.h. des Sitzes des angeschlossenen Hilfsschalters erreicht werden muß.

Es ist bekannt, bei seitlichem Anbau von Hilfsschaltern an Schaltgeräte die Hilfsschalter senkrecht zur Seitenwand des zu verbindenden Gerätes mit dem Betätigungsnippel in eine Öffnung einzusetzen und dann den Hilfsschalter mittels Schrauben an dem Gerät zu befestigen. Aus der EP-PS 0224 046 ist eine Anordnung zum Befestigen eines Hilfsschalters an einem Schaltgerät in seitlichem Anbau bekannt, wobei ein am Schaltgerät festzuschraubendes Zwischenteil vorgesehen ist, in das der Hilfsschalter federnd durch Aufdrücken senkrecht zur seitlichen Anbauwand des Schaltgerätes eingerastet wird und gleichzeitig der Betätigungsnippel in eine Öffnung des Schaltgerätes eingeführt wird.

Aus der EP-OS 0223 622 ist eine Ausbildung von Hilfsschaltern zum Verbinden untereinander Seite an Seite mittels scharnierartiger Rastmittel und einer zusätzlichen federnden die beiden Hilfsschalter übergreifenden Sperrklinke bekannt. Auch diese Verbindung, ebenso wie die vorerwähnte, kann nur durch eine Bewegung senkrecht auf die seitliche Anbauwand zu, ggf. als Drehbewegung, hergestellt werden und benötigt daher einen erheblichen Montageraum.

Zum Verbinden elektromagnetischer Schaltgeräte sind auch bereits Kupplungselemente mit schwalbenschwanzförmigen Führungen bekannt, die zwischen zwei miteinander zu verbindenden Geräten eingeführt und jeweils an den anliegenden Seiten mit diesen verrastet werden, wodurch die Schaltgeräte zu einer Einheit gekoppelt werden, siehe beispielsweise DE-OS 3828 277.

In der US 4774 484 ist eine gattungsgemäße Anordnung zum Verbinden von Schaltgeräten mit Hilfsschaltern beschrieben.

Die Verbindung von beispielsweise Hilfsschalter mit Schaltgerät ebenso wie zweier Hilfsschalter untereinander erfolgt in zwei Schritten dergestalt, daß in einem ersten Schritt der Hilfsschalter senkrecht auf die zu verbindende Seite des Schaltgerätes bzw. Hilfsschalters hinzubewegt wird, um entsprechende Vorsprünge des Hilfsschalters in entsprechende Ausnehmungen des zu verbindenden Teiles einzustecken. Nach dem planen Aneinanderliegen der beiden miteinander zu verbindenden Teile erfolgt dann noch eine Verrastbewegung in einer Richtung parallel zu den verbindenden Seiten. Zum Lösen der miteinander zu verbindenden Teile muß dann in umgekehrter Richtung vorgegangen werden, d.h. erst werden die beiden Teile gegeneinander verschoben und dann durch Herausziehen, d.h. Abziehen von der Verbindungsseite die Teile voneinander gelöst. Für die Montage und Demontage von Hilfsschaltern und Schaltgerät ist also seitlich des Schaltgerätes an der Verbindungsseite ein über die Breite (Dicke) des mindestens ein der Breite des Hilfsschalters einschließlich vorstehendem Betätigungsnippel entsprechend breiter Raum nötig, um einen Hilfsschalter zu montieren. Dieser erhöhte Platzbedarf für die Montage und Demontage eines Hilfsschalters bedeutet jedoch, daß es nicht möglich ist, bei einem im Betrieb auf Montageschienen dicht an dicht eingebauten Schaltgerät den Hilfsschalter einzeln nachträglich zu lösen (da in der Regel seitlich kein Platz vorhanden ist). Vielmehr muß dann im Betrieb das Schaltgerät komplett demoniert werden, um nachträglich einen Hilfsschalter zu demontieren und z.B. auszutauschen.

In der FR-A-2555 803 wird in Verbindung mit einem Schalter und Reihenklemmen beschrieben, wie diese in eine Ausnehmung an der zu verbindenden Seite des Schalters eingesetzt werden und anschließend Reihenklemmen verrastet werden. Hierzu ist das Ansetzen der Reihenklemmen zuerst in einer Bewegung senkrecht auf die zu verbindende Seite in die Ausnehmung des Schalters hinein erforderlich und anschließend eine Verrastung durch Verschieben parallel zur Verbindungsseite und quer zur Bewegungsrichtung des Schaltnippels.

Auch diese Anordnung eines Schalters zeigt die gleichen Nachteile wie die Anordnung gemäß US 4774 484, da sie auf dem gleichen Verbindungsprinzip beruht.

Der Erfindung liegt die Aufgabe zugrunde, eine montagefreundliche Verbindung von Hilfsschaltern und Schaltgeräten für seitlichen Anbau zu schaffen, die wenig oder keinen seitlichen Montageraum beansprucht, Schraubverbindungen vermeidet, eine präzise Positionierung des Hilfsschalters ermöglicht und auch im eingebauten Zustand der Schaltgeräte ein Montieren und Demontieren der Hilfsschalter ohne Ausbau des Schaltgerätes ermöglicht.

Zur Lösung der gestellten Aufgabe wird für eine gattungsgemäße Kombination vorgeschlagen, daß die Einführöffnung im Gehäuse der Hilfsschalter für den Betätigungsnippel eines anzuschließenden Hilfsschalters in einer Richtung senkrecht zur Bewegungsrichtung des Schaltorgans des Schaltgerätes bzw. des Betätigungsnippels des Hilfsschalters um eine bis an die Seitenkante reichende Ausnehmung mit einer zum vollständigen Eintauchen des Betätigungsnippels ausreichenden Tiefe vergrößert ist und die Einführöffnung im Gehäuse des Schaltgerätes in einer Richtung senkrecht zur Bewegungsrichtung des Schaltorgans bzw. des Betätigungsnippels um eine Ausnehmung mit einer zum vollständigen Eintauchen des Betätigungsnippels ausreichenden Tiefe vergrößert ist, wodurch ein Bewegungsweg zum Eintauchen des Betätigungsnippels in die Ausnehmung und zum parallelen Verschieben des Betätigungsnippels bis in die Einführöffnung des Hilfsschalters bzw. Schaltgerätes geschaffen ist, und die an den miteinander zu verbindenden Seiten der Gehäuse einander zugeordneten Führungsstege und Nuten parallel zur Erstreckungsrichtung der Ausnehmung als Schwalbenschwanzverbindung ausgebildet und der Ausnehmung der Gehäuse so zugeordnet ist, daß nach Eintauchen des Betätigungsnippels eines Hilfsschalters in eine der Ausnehmungen eines zu verbindenden Gehäuses die Führungsstege durch Verschieben der miteinander zu verbindenden Gehäuse parallel zu ihren Verbindungsseiten in die Nuten einführbar und bis zum Erreichen der Position des Eingriffes des Betätigungsnippels mit dem Schaltorgan verschiebbar sind.

Die Erfindung ermöglicht, die Hilfsschalter seitlich am zu verbindenden Gerät, entweder Schaltgerät oder bereits Hilfsschalter, anzusetzen und parallel zur Gehäusewand in eine Schwalbenschwanzhalterung einzuschieben.

Die Erfindung ermöglicht auch im eingebauten und verdrahteten Zustand eines Schaltgerätes dieses nachträglich im seitlichen Anbau mit einem Hilfsschalter auszurüsten. Ermöglicht wird dieser Anbau durch eine Parallelführung mittels einer schwalbenschwanzförmigen Verbindung und der Schaffung eines zusätzlichen Bewegungsweges für den aus dem Hilfsschalter herausragenden Betätigungsnippel. Dieser Bewegungsweg wird im Anschluß an die bereits vorhandene Einführöffnung für den Betätigungsnippel in dem zu verbindenden Gerät geschaffen, wobei der Querschnitt dieser Ausnehmung ausreichend groß ist, um ein vollständiges Eintauchen des Betätigungsnippels zu ermöglichen, während die Länge des Betätigungsweges in Abhängigkeit von der Anordnung der Schwalbenschwanzverbindung an den Gehäuseseiten zu wählen ist. Die Hilfsschalter werden mit einer Anschlußseite und einer Anbauseite ausgebildet, dergestalt, daß die der Gehäuseseite mit Betätigungsnippel gegenüber angeordnete hierzu parallele Gehäuseseite als Anbauseite analog zu den Verbindungsseiten des Schaltgerätes für weitere Hilfsschalter ausgebildet ist. Damit wird es möglich, Hilfsschalter auch paketweise aneinanderzubauen und seitlich an Schaltgeräte anzusetzen. Die Schaltgeräte werden so ausgebildet, daß beim Schaltgerät zwei einander gegenüberliegende zueinander parallele Seiten des Gehäuses spiegelbildlich zueinander als Verbindungsseiten zum Anschließen von Hilfsschaltern ausgerüstet sind.

Die einen zusätzlichen Bewegungsraum als Montageraum für den Betätigungsnippel des Hilfsschalters vorgesehene die Einführöffnung vergrößernde Ausnehmung kann beispielsweise als Durchbrechung der Gehäusewand ausgeführt werden, und geht damit unmittelbar in die Einführöffnung über. Ausnehmung und Einführöffnung können beispielsweise zusammen L-förmig oder T-förmig, auch mit ungleichen T-Balken ausgebildet sein. Wenn die Gehäusewand keine ausreichende Tiefe entsprechend der Eintauchtiefe des Betätigungsnippels des Hilfsschalters aufweist, ist der Bereich der Ausnehmung im Gehäuseinneren als Freiraum zu belassen, so daß der Betätigungsnippel eintauchen und in der Ausnehmung parallel zur Gehäusewand bewegbar ist.

Es ist auch möglich, den zusätzlichen Bewegungsraum für den Betätigungsnippel des Hilfsschalters in der Weise auszubilden, daß in die Wandung des Gehäuses ein Kanal, beispielsweise eine U-förmige Nut eingeformt wird, der eine ausreichende Tiefe zum Eintauchen des Betätigungsnippels aufweist und der an die Einführöffnung des Gehäuses anschließt. Die Ausnehmung kann je nach Dimensionierung des Schaltgerätes an einer Seite bis zur Kante durchlaufend ausgebildet sein oder aber innerhalb der Seite des Gehäuses begrenzt sein. An Hilfsschalter reicht sie jedoch bis an die Seiten kante der Gehäuses.

Um eine präzise Führung und Positionierung der Hilfsschalter untereinander bzw. am Schaltgerät zu erreichen, wird vorgeschlagen, daß auf den miteinander zu verbindenden Seiten der Gehäuse je zwei Nuten für eine Schwalbenschwanzverbindung oder zwei Paar Führungsstege ausgebildet sind, wobei je eine Nut und ein Paar Führungsstege in Einschieberichtung vor der Einführöffnung und die anderen danach angeordnet sind. Die Einführöffnung liegt also zwischen den beiden Schwalbenschwanzhalterungen. Für den Fall, daß die Schwalbenschwanzverbindungen nicht seitlich am Gehäuse enden und die Nuten für die Schwalbenschwanzverbindung in die Gehäusewandung eingesetzt ausgebildet sind, wird vorgeschlagen, zum Ein- und Ausführen der Führungsstege jeweils eine offene U-förmige Einführungsnut zum senkrechten Einsetzen der Führungsstege des anzuschließenden Gehäuses in Einschieberichtung vor den Schwalbenschwanznuten in der Gehäusewandung auszubilden.

Für die Endstellung der miteinander zu verbindenden Gehäuse von Hilfsschaltern und/oder Schaltgerät ist eine Verrastung mittels einer Rastzunge vorgesehen, die jedoch lösbar ist. Gemäß einem Vorschlag der Erfindung sind die Hilfsschalter auf der Seite des Gehäuses, wo der Betätigungsnippel herausragt, randseitig mit einer angeformten in einer Durchbrechung der Gehäusewandung federnden Rastzunge ausgestattet, die in eine entsprechend am Gehäuse des Schaltgerätes oder auf der gegenüberliegenden Seite des Hilfsschalters ausgebildete Rastnut bei Erreichen der Eingriffsposition des Betätigungsnippels bei Verbinden zweier Gehäuse einrastbar ist. Zum Lösen der miteinander verbundenen Gehäuse ist die Rastzunge aus der Verrastung aushebelbar, so daß die Geräte durch Parallelverschieben Seite an Seite gegeneinander wieder demontierbar sind.

Um das Einrasten zu erleichtern, ist vorgesehen, in Einschubrichtung vor der Rastnut eine Ausnehmung vorzusehen, in die die Rastzunge beim Zusammenführen der miteinander zu verbindenden Gehäuse eintaucht, um dann über eine Keilfläche als Einführschräge federnd zurückgedrückt zu werden und beim weiteren Zusammenschieben der Gehäuse nach Einrasten des Betätigungsimpulses des Hilfsschalters in seiner Endposition ebenfalls in die Rastnut einzurasten.

Um eine sachgerechte Zusammenstellung von Hilfsschaltern zu ermöglichen und zu verhindern, daß nicht zueinander passende Schalter miteinander gekoppelt werden, sind die Hilfsschalter mit einer Kodierung ausgestattet, so daß nur geeignete Hilfsschalter miteinander kombiniert werden können. Als Kodierung sind im Bereich der Schwalbenschwanzverbindung Stege zur Einschubbegrenzung vorgesehen, die bei Zulässigkeit der Verbindung der Hilfsschalter miteinander bei Inbetriebnahme abgebrochen werden, so daß der Verbindungsweg, d.h. Einschubweg, freigegeben ist.

Anhand der Zeichnung wird ein Ausführungsbeispiel gemäß der Erfindung beschrieben und der Anbau näher erläutert. Es zeigen
- Figur 1a,1b,1c: die Seitenansicht, Vorderansicht und Draufsicht eines elektromagnetischen Schaltgerätes mit je zwei auf beiden Seiten angebauten Hilfsschaltern
- Figur 2a-f: sechs Ansichten eines im wesentlichen quaderförmigen Hilfsschalters gemäß Figur 1a,b und c
- Figur 3: Ausschnitt der Ansicht R von Figur 2a
- Figur 4: Detail des Schnittes DE von Figur 2a
- Figur 5: Detail des Schnittes BC von Figur 2a
- Figur 6: Detail des Schnittes F1, F2 von Figur 2a
- Figur 7: Detail des Schnittes PQ von Figur 2b
- Figur 8: Detailansicht A von Figur 2b
- Figur 9: Detail des Schnittes JK von Figur 2b
- Figur 10: Detail des Schnittes GH von Figur 2b
- Figur 11: Seitenansicht des Schaltgerätes gemäß Figur 1a ohne Hilfsschalter
- Figur 12,13,14: Details gemäß Schnitt UV und U1V1 und Y2 Y2 von Figur 11
- Figur 15: Variante des Details der Einführöffnung des Schaltgerätes nach Figur 11
- Figur 16,a,b,c: schematische Darstellung des seitlichen Anbaues eines Hilfsschalters an ein Schaltgerät
- Figur 17: Detail des Schnittes Y3-Y3 von Figur 11.

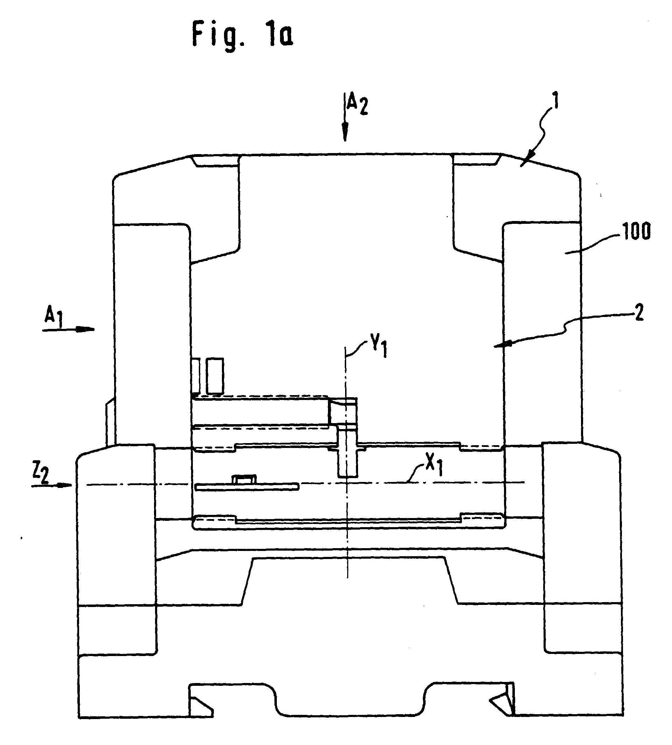

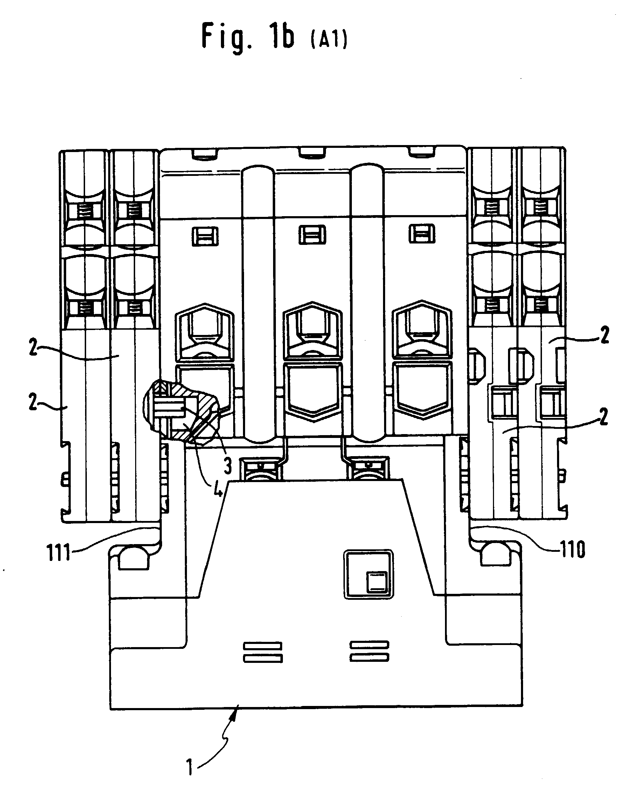

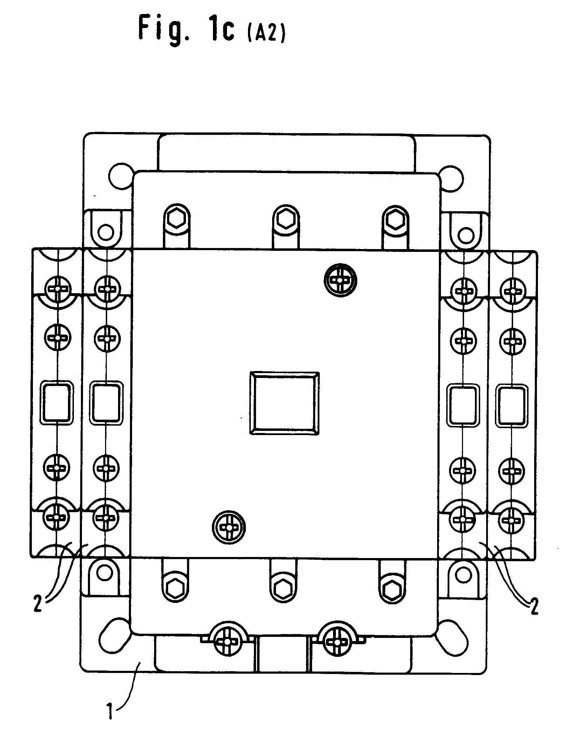

Das in der Figur 1a in der Seitensansicht dargestellte elektromagnetische Schaltgerät 1 mit mehrteiligem Gehäuse 100, beispielsweise ein Leistungsschütz, ist durch seitlichen Anbau mit einem oder mehreren Hilfsschaltern 2 ausgerüstet. Der Hilfsschalter 2 wird dabei seitlich am Schaltgerät 1 angesetzt und durch Verschieben parallel zur Gehäusewand in Richtung Z2 in eine Schwalbenschwanzhalterung eingeführt und am Schaltgerät 1 in der gewünschten Position gehalten. Figur 1b zeigt die Vorderansicht gemäß A1 und Figur 1c die Draufsicht gemäß A2 nach Figur 1a. In dem dargestellten Beispiel ist das Schaltgerät auf den beiden einander gegenüberliegenden Seiten 110, 111, die zueinander parallel verlaufen, mit je zwei angesetzten Hilfsschaltern 2 zusätzlich ausgerüstet. Die einander gegenüberliegenden Seiten des elektromagnetischen Schaltgerätes 1 sind spiegelbildlich zueinander ausgebildet, so daß es möglich ist, gleiche Hilfsschalter auf beiden Seiten des Schaltgerätes 1 durch paralleles seitliches Aufschieben anzubauen.

Die Hilfsschalter 2, siehe Figur 1b, weisen einen seitlich über das Gehäuse des Hilfsschalters vorstehenden Betätigungsnippel 3 auf, mit dem sie durch eine Öffnung des Gehäuses des Schaltgerätes 1 durchsteckbar und mit dem Schaltorgan 4 des Schaltgerätes in Eingriff gebracht werden.

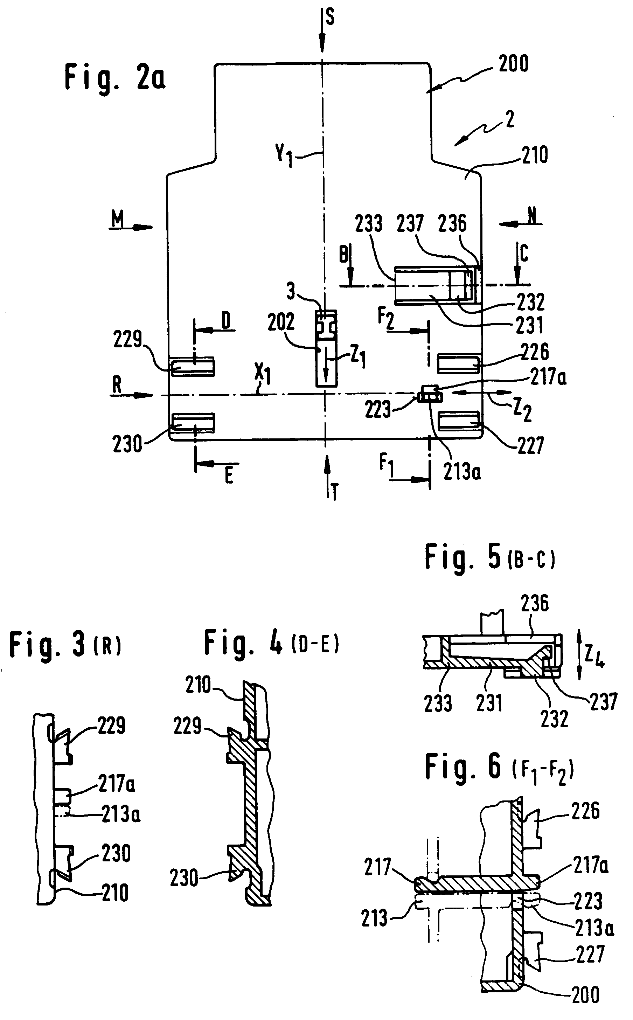

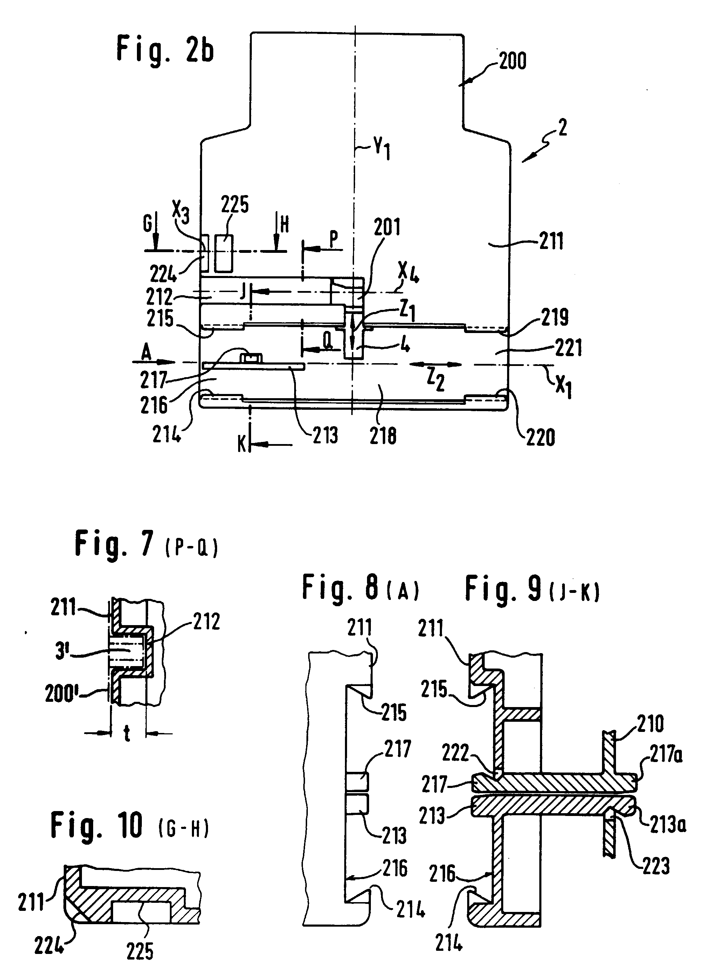

In den Figuren 2a bis f ist der Hilfsschalter gemäß Figur 1a bis c durch seine Außenansichten dargestellt, er weist eine relativ schmale Einbaubreite auf. Figur 2a zeigt die Seite 210 des Hilfsschalters 2, aus der durch die Gehäuseöffnung 202 der Betätigungsnippel 3 des Hilfsschalters herausragt, siehe auch die Ansichten 2c bis 2f. Der Betätigungsnippel 3 ist gegen den Druck einer Feder in der Gehäuseöffnung 202 in der vertikalen Achse Y1 in Richtung Z1 bewegbar. Der Hilfsschalter ist in einem mehrteiligen Gehäuse 200 untergebracht, das bevorzugt aus zwei die Verbindungsseiten 210, 211 bildenden Gehäusehälften zusammengesetzt ist, die beispielsweise miteinander verrastet werden. Hierbei bildet die Seite 210 gemäß Figur 2a die Anschlußseite zum Einführen des Betätigungsnippels 3 in das Schaltorgan eines Schaltgerätes oder in das Schaltorgan eines weiteren Hilfsschalters, während die gegenüberliegende hierzu parallele Seite 211 gemäß Figur 2b als Anbauseite für weitere Hilfsschalter ausgebildet ist.

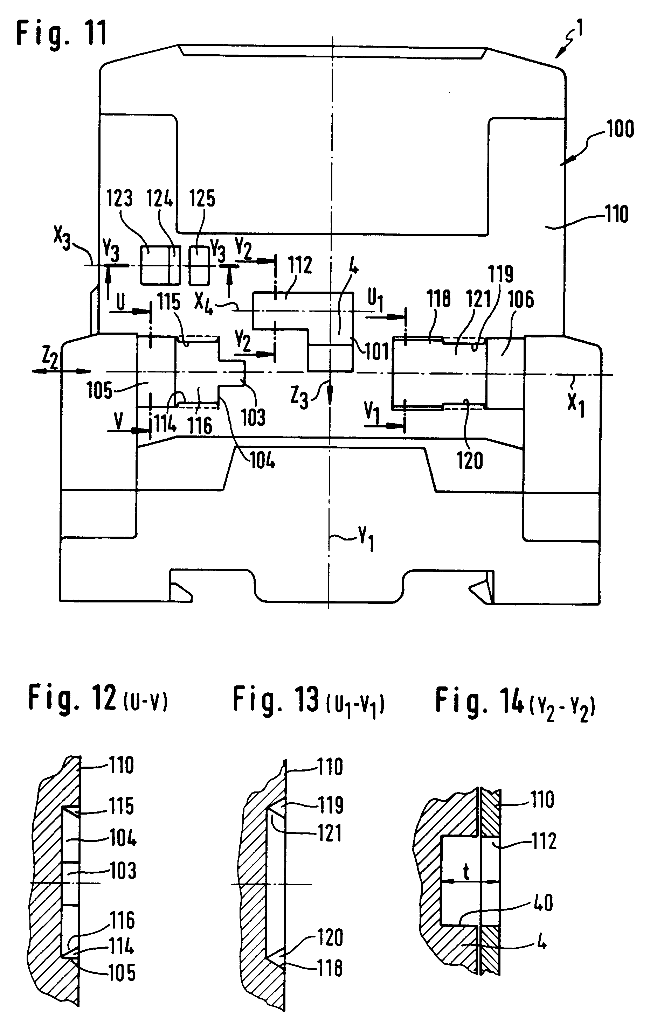

Zum Verrasten des Hilfsschalters 2 in einer Schwalbenschwanzhalterung an dem Schaltgerät oder mit weiteren Hilfsschaltern ist dieser auf der Seite 210, auf der der Betätigungsnippel 3 herausragt, mit Führungsstegen 229, 230 und 226, 227, die paarweise längs und parallel zu der Achse X1 angeordnet sind, ausgerüstet. Die Achse X1 definiert hierbei die Einschieberichtung Z2 in entsprechende Nuten am zu verbindenden Schaltgerät bzw. Hilfsschalter. Die Achse X1 ist hierbei bevorzugt senkrecht zur Achse Y1, der Bewegungsrichtung Z1 des Betätigungsnippels und der Kontakte angeordnet. Wie aus den Ansichten gemäß Figur 3 und Figur 4 und Figur 6 zu ersehen ist, sind die Führungsstege, die einander gegenüberliegen, außenseitig keilförmig hinterschnitten ausgebildet, mit einer zusätzlichen Auskehlung am Stegfuß, um entsprechend in eine hinterschnittene Nut am zu verbindenden Gehäuse zum Herstellen der Schwalbenschwanzverbindung eingeschoben zu werden. Die Führungsstege sind paarweise zu beiden Seiten des Betätigungsnippels 3 auf der Seite 210 des Hilfsschalters 2 angeordnet, um auf diese Weise einen sehr genauen präzisen Anbau des Hilfsschalters zu ermöglichen.

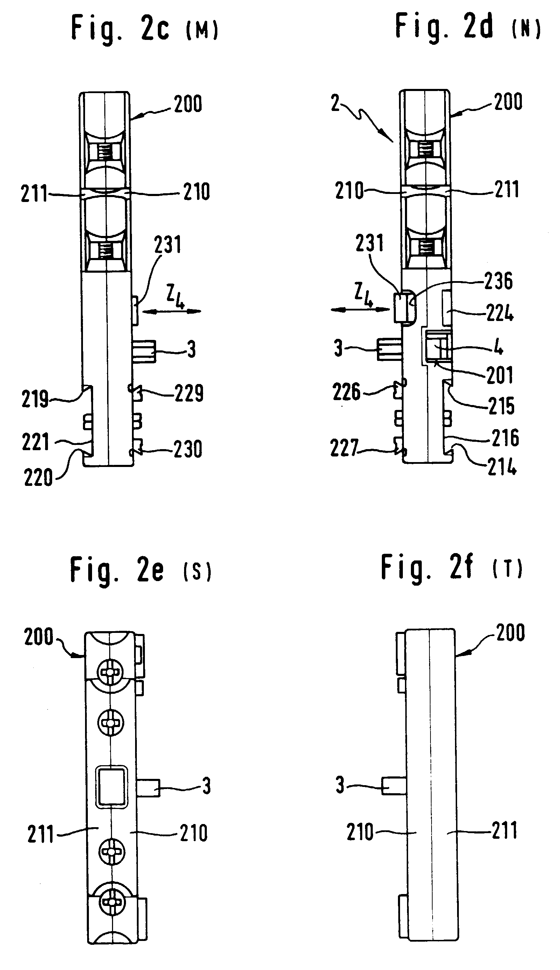

Des weiteren ist auf der Anschlußseite 210 des Hilfsschalters, siehe Figur 2a, randseitig eine federnde Rastzunge 231 ausgebildet, die in der Ausnehmung 236 des Gehäuses 200, siehe auch Detail Figur 5 und Ansicht gemäß Figur 2d, federnd in Pfeilrichtung Z4 bewegbar ist. Die Federachse 233, wo die Rastzunge 231 am Gehäuse des Hilfsschalters befestigt ist, verläuft senkrecht zur Einschiebeachse X1 und parallel zur Achse Y1. Die Rastzunge 231 ist randseitig mit dem über das Gehäuse vorstehenden Rastnippel 232 ausgerüstet und weist zum Rand hin die Absatzstufe 237 auf, so daß beim Eingreifen in die Durchbrechung 236 vom Rand her und Drücken auf die Absatzstufe 237, siehe Figur 5, die Rastzunge 231 auch von außen her in Pfeilrichtung Z4 bewegbar ist und damit der Rastnippel 232 aus einer Verrastung herausgehebelt werden kann.

Figur 2c zeigt die Ansicht gemäß M nach Figur 2a, Figur 2d zeigt die Ansicht N nach Figur 2a, Figur 2e die Ansicht S nach Figur 2a und Figur 2f die Ansicht T nach Figur 2a. Die der Anschlußseite 210 gegenüberliegende Seite des Hilfsschalters ist in Figur 2b dargestellt. Auf dieser Seite 211 des Hilfsschalters ist in der vertikalen Achse Y1 für die Einführung des Betätigungsnippels 3 die Einführöffnung 201 als Durchbrechung des Gehäuses 200 ausgebildet, hinter der sich im Gehäuseinneren das Schaltorgan 4 für den Eingriff des Betätigungsnippels 3 eines anzuschließenden Hilfsschalters befindet. Das Schaltorgan 4 ist ebenfalls in der vertikalen Achse Y1 in Pfeilrichtung Z1 hinter der Einführöffnung 201 bewegbar, entsprechend ist auch die Einführöffnung als Rechteck gestaltet, um diese Bewegung des Schaltorgans und Betätigungsnippels 3 in der Achse Y1 bei Eingriff zu ermöglichen. Zum Verrasten des Hilfsschalters 2 mit einem weiteren Hilfsschalter sind auf der Seite 211 Schwalbenschwanznuten 221, 216 längs der Achse X1 ausgebildet, die senkrecht zur Achse Y1 des Hilfsschalter 2 verläuft und die die Einschieberichtung Z2 definiert. Die Schwalbenschwanznuten 216, 221 sind bevorzugt von den Seitenrändern des Schalters 2 ausgehend ausgebildet, und weisen die keilförmig hinterschnittenen einander gegenüberliegenden parallelgeführten Nutränder 214, 215 und 219, 220 auf. In diese Schwalbenschwanznuten 216, 221 wird dann ein Hilfsschalter mit der Anschlußseite, siehe Figur 2a, mit den paarweise angeordneten Führungsstegen 226, 227 und 229, 230 eingeschoben, durch paralleles Verschieben der Gehäuse Seite an Seite gegeneinander in der Achse X1, gleich Einschieberichtung Z2. Für den vorstehenden Betätigungsnippel 3 des Hilfsschalters ist ein Bewegungsraum in Verlängerung und Vergrößerung der Einführöffnung 201 auf der Seite 211 des Hilfsschalters geschaffen, wo der Betätigungsnippel in die Einführöffnung 201 eingesteckt werden muß. Dieser zusätzliche Bewegungsweg für den Betätigungsstößel wird beispielsweise beim Hilfsschalter gemäß Figur 2b durch die Ausnehmung 212 in Gestalt einer entsprechenden in die Gehäusewandung eingeformten Nut, siehe auch Figur 7, geschaffen. Die Ausnehmung 212 schließt unmittelbar an die Einführöffnung 201 und reicht beim Hilfsschalter bis an die Seitenkante. Die Ausnehmung 212 weist, siehe Figur 7, einen so großen Querschnitt auf, daß der Betätigungsnippel 3' eines anzuschließenden Verbindungsschalters, der über dessen Gehäuse 200' vorsteht, durch die Ausnehmung 212 bis in die Einführöffnung 201 durchgeschoben werden kann. Die Tiefe t der Ausnehmung 212 sollte etwas größer als der Überstand des Betätigungsnippels 3 über das Gehäuse des Hilfsschalters ausgebildet sein, um ein berührungsfreies Eintauchen des Betätigungsnippels 3 in die Ausnehmung 212 zu ermöglichen. Die Einschiebeachse X4 der Ausnehmung 212 ist parallel verlaufend zur Achse X1 der Schwalbenschwanzverbindung und der Einschieberichtung Z2 der Gehäuse gegeneinander angeordnet. Damit läuft die Achse X4 bevorzugt auch senkrecht zur Achse Y1 des Hilfsschalters. Randseitig zugeordnet zu der Ausbildung der Rastzunge ist auf der Seite 211 des Gehäuses des Hilfsschalters die Rastnut 225 mit Einführschräge 224, siehe Figur 10, ausgebildet, so daß beim Einführen und Verrasten zweier Gehäuse miteinander die Rastzunge 231 in die Ausnehmung 236 eingedrückt wird so lange, bis der Rastnippel 232 in die Rastnut 225 einrastet. Damit ist gleichzeitig die Endstellung der beiden miteinander zu verbindenden Schalter gegeben und eine genaue Positionierung des Hilfsschalters entweder am Schaltgerät, das analog zur Anbauseite 211 des Hilfsschalters ausgebildet ist oder an einem weiteren Hilfsschalter.

Schalbenschwanznuten und Schwalbenschwanzführungsstege sowie Betätigungsnippel 3 und Einführöffnung 201 mit Bewegungsweg in Gestalt der Ausnehmung 212, Rastzunge 231 und Rastnut 225 sind an den miteinander zu verbindenden Seiten der Gehäuse von Hilfsschaltern und/oder Schaltgeräten so angeordnet, daß sie zueinander passen und miteinander durch Einschieben, d.h. paralleles Verschieben Seite an Seite, in den vorgesehenen Schiebeachsen miteinander in Eingriff bringbar sind.

Die beiden Gehäuseteile mit den Gehäuseseiten 210 und 211 eines Hilfsschalters 2 werden beispielsweise zusätzlich mittels Begrenzungsstegen 217 bzw. 213a, siehe Figuren 6 und 9 u.a., verrastet. Hierzu ist beispielsweise der Begrenzungssteg 217 von der Innenseite der Gehäuseseite 210 senkrecht abstehend ausgebildet und weist eine vorstehende Rastnase am Ende auf, die durch eine Öffnung 222 an der der Gehäuseseite 210 gegenüberliegenden Gehäuseseite 211 durchgesteckt ist und federnd einrastet. Analog und parallel hierzu ist an dem Gehäuseteil von der Gehäuseseite 211 ausgehend der Raststeg 213a ausgebildet, der durch eine entsprechendes Durchsteckloch 223 der Gehäuseseite 210 durchsteckbar und mit einer vorstehenden Rastnase federnd einrastet. In Verlängerung des Raststeges 217 steht dieser als Nippel 217a über die Gehäuseseite 210 vor und bildet einen Kodiersteg für die Hilfsschalter. Die Kodierung funktioniert in der Weise, daß der Nippel 217a als Einschubbegrenzung wirkt, wenn er beim Zusammenführen zweier Hilfsschalter auf den Gegennippel, das ist die Rastnase 217 des anderen Hilfsschalters, trifft, so daß die Hilfsschalter nicht miteinander gekoppelt werden können. Bei Inbetriebnahme wird der Nippel 217a, d.h. der Kodiersteg abgebrochen, wodurch er einem zweiten Hilfsschalter zugeordnet ist und mit diesem kombiniert werden kann. Auf diese Weise wird verhindert, daß ungeeignete Hilfsschalter miteinander kombiniert werden, z.B. bei Auswechseln von Geräteteilen oder dergleichen. In Verlängerung des Raststeges 213a steht dieser an der äußeren Gehäuseseite 211 vor, und zwar als Steg 213; so daß er auch für eine Kodierung für die Hilfsschalter benutzt werden kann.

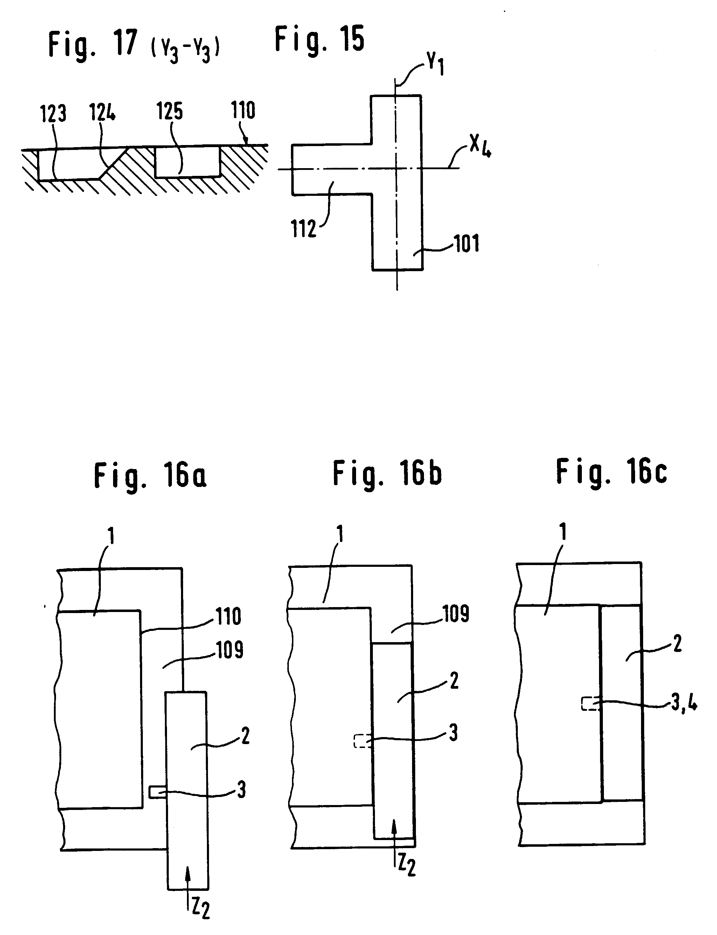

Für den Hilfsschalteranbau mit einer Schwalbenschwanzhalterung durch seitliches Ansetzen und Aufschieben parallel zu den miteinander zu verbindenden Gehäusewänden ist die Anschlußseite am Schaltgerät 1 gemäß Figur 1a analog zu der Seite 211 des Hilfsschalters 2 gemäß Figur 2b ausgebildet, um einen Hilfsschalter mit Betätigungsnippel anzubauen. Das Schaltgerät gemäß Figur 1a, 1b, 1c ist hierzu auf zwei einander gegenüberliegenden Seiten, die parallel zueinander sind, nämlich den Seiten 110 und 111, spiegelbildlich gleich ausgebildet, wobei die Ansicht der Seite 110 in Figur 11 dargestellt ist. Auf der vertikalen Achse Y1 ist die Einführöffnung 101 für den Betätigungsnippel eines Hilfsschalters ausgebildet, die sich entlang der Achse Y1 erstreckt und damit den Weg Z3 für die Bewegung des Schaltorgans 4 und des Betätigungsnippels 3 schafft. Senkrecht hierzu in der Achse X4 ist die Einführöffnung 101 um die Ausnehmung 112 vergrößert, um einen Bewegungsweg für den Betätigungsnippel des Hilfsschalters zum Einführen in die Einführöffnung 101 zu schaffen. Diese Ausnehmung 112, die durch die Gehäusewandung hindurch bis ins Innere des Schaltgerätes 1 mit einer ausreichenden Tiefe t, siehe Figur 14, reicht, bildet den Verschiebeweg um den Hilfsschalter in die Schwalbenschwanzführungen des Schaltgerätes einzuführen. Wie aus der Figur 14 ersichtlich ist, wird die ausreichende Tiefe t der Ausnehmung 112 zum Einführen des Betätigungsnippels beispielsweise durch eine entsprechende Nut 40 im sich in diesem Bereich befindlichen Schaltorgan 4 geschaffen. Die Ausnehmung 112 kann sich beispielsweise L-förmig, wie in der Figur 11 dargestellt, oder auch beispielsweise T-förmig symmetrisch oder unsymmetrisch, wie in der Figur 15 dargstellt, an die Einführöffnung 101 anschließen.

Die Schwalbenschwanzhalterungen sind parallel zur Achse X4 und senkrecht zur vertikalen Achse Y1 längs der Achse X1 auf der Seite 110 des Schaltgerätes 1 angeordnet, und zwar eine Schwalbenschwanznut 116 in Einschubrichtung Z2 vor der Einführöffnung 101 und eine Schwalbenschwanznut 121 hinter der Einführöffnung 101. Die Ausnehmung 112 zum Einführen des Betätigungsnippels schließt ebenfalls in Einschubrichtung Z2 nach vorne an die Einführöffnung 101 an. Die schwalbenschwanzförmigen Aufnahmenuten 116 bzw. 121 für die entsprechenden Paare von Führungsstegen 226, 227 und 229, 230 der Hilfsschalter 2, siehe Figur 2a, sind im Detail vergrößert in den Figuren 12 und 13 dargestellt. Zum Einrasten der Rastzunge 231 der Hilfsschalter ist ebenfalls in der die Endstellung des angebauten Hilfsschalters bezeichnenden Position die Rastnut 125 auf der Seite 110 des Schaltgerätes ausgebildet. Zur Erleichterung des Zusammenführens von Schaltgerät und Rastzunge des Hilfsschalters ist in Einschubrichtung vor der Rastnut 125 eine ausreichend große und tiefe Ausnehmung 123 vorgesehen, siehe Detail in Figur 17, in die der Rastnippel 232 der Rastzunge 231 eingeführt wird, um beim Zusammenschieben der Gehäuse von Hilfsschalter 2 und Schaltgerät 1, siehe Fig. 16a,b,c, über die Keilfläche - Einführschräge 124 geführt und eingedrückt zu werden und dann am Ende des Einschubvorganges in die Rastnut 125 mit dem Rastköpfchen 232 einzurasten.

Damit die keilförmigen Führungsstege des Hilfsschalters in die Schwalbenschwanznuten 116, 121 des Schaltgerätes einführbar sind, schließt sich jeweils in Einschubrichtung davor eine offene Nut 105 bzw. 118 zum Einsetzen der Führungsstege des Hilfsschalters bis auf die Tiefe der Schwalbenschwanznut an, um dann von hier aus in die Schwalbenschwanznut unter die hinterschnittenen Nutränder eingeschoben zu werden in Schieberichtung Z2 und entgegensetzt wieder herausgezogen zu werden.
In den Figuren 16a,b,c ist schematisch in der Draufsicht das Anbauen eines Hilfsschalters 2 an ein elektrisches Schaltgerät dargestellt. Der Hilfsschalter wird hierbei seitlich an die anzuschließende Seite 110 des Schaltgerätes mit dem Betätigungsnippel 3 herangeführt und so lange parallel zu der Seite 110 verschoben, bis der Nippel 3, siehe Figur 16b, in die Ausnehmung 112 eintaucht. Nach weiterem Parallelverschieben verrastet der Hilfsschalter mit seinen vorstehenden Führungsstegen in den schwalbenschwanzförmigen Nuten an der Seite 110 des Schaltgerätes und wird gleichzeitig bis in die Endposition des Betätigungsnippels 3 in der Einführöffnung, bis er in Eingriff mit dem Schaltorgan des Schaltgerätes kommt, eingeschoben, siehe Figur 16c.

Für die Aufnahme der vorstehenden Rastnasen 217a, 213a des Hilfsschalters ist die erste Schwalbenschwanznut 116 des Schaltgerätes in Richtung auf die Einführöffnung mit der sich anschließenden Einstecknut 103 ausgestattet. Die Führungsstege des Hilfsschalters werden auch beim Einschieben durch die Begrenzungswand 104 der Schwalbenschwanznut 116 in einer Endposition blockiert.
Das elektromagnetische Schaltgerät kann äußerlich so gestaltet sein, daß das Unterteil des elektromagnetischen Schaltgerätes, in dem der Antrieb untergebracht ist, über den Kontaktbereich mit einem Absatz 109 vorsteht, der eine der Dicke des Hilfsschalters entsprechenden Überstand aufweist, so daß sich nach Anbau des Hilfsschalters eine geschlossene Kontur, siehe Figur 16c, bei Anbau je eines Hilfsschalters auf jeder Seite des Schaltgerätes ergibt.

## Patentansprüche

1. Kombination von Hilfsschaltern (2) untereinander bzw. Hilfsschalter (2) mit einem elektromagnetischen Gerät (1), die zum lösbaren Verbinden Seite an Seite der Hilfsschalter untereinander und/oder mit dem elektromagnetischen Schaltgerät ausgebildet sind, wobei die Hilfsschalter (2) ein Gehäuse (200) mit einer als Anschlußseite an einen Hilfsschalter oder an ein elektromagnetisches Gerät ausgebildeten Seite mit einem aus dem Gehäuse (200) des Hilfsschalters (2) herausragenden Betätigungsnippel (3) aufweisen und die zu der Anschlußseite parallele Gehäuseseite des Hilfsschalters (2) als Anbauseite für den Anschluß eines weiteren Hilfsschalters (2) mit dessen Anschlußseite ausgebildet ist und wobei das Gehäuse (100) des Schaltgerätes (1) an zwei einander gegenüber angeordneten zueinander parallelen Seiten in spiegelbildlicher Anordnung als Verbindungsseiten zum Anschließen der Hilfsschalter (2) mit ihrer Anschlußseite ausgerüstet ist, und der Betätigungsnippel (3) des Hilfsschalters (2) durch eine Einführöffnung (201) im Gehäuse (200) des zu verbindenden Hilfsschalters (2) bzw. eine Einführöffnung (101) im Gehäuse (100) des Schaltgerätes (1) mit einem beweglichen Schalterorgan (4) des Hilfsschalters (2) bzw. Schaltgerätes (1) in Eingriff bringbar ist und eine Verrastung der miteinander zu verbindenden Gehäuse von Hilfsschalter und Schaltgerät mittels an den Gehäusen von Hilfsschalter und Schaltgerät ausgebildeten Nuten und Stegen durch Verschieben der miteinander zu verbindenden Gehäuse (200, 100) parallel zu ihren Anschluß-, Anbau- und Verbindungsseiten vorgesehen ist, **dadurch gekennzeichnet,** daß die Einführöffnung (201) im Gehäuse der Hilfsschalter (2) für den Betätigungsnippel (3) eines anzuschließenden Hilfsschalters (2) in einer Richtung (X4) senkrecht zur Bewegungsrichtung (Z3 bzw. Z1) des Schaltorgans (4) des Schaltgerätes (1) bzw. des Betätigungsnippels (3) des Hilfsschalters (2) um eine bis an die Seitenkante reichende Ausnehmung (212) mit einer zum vollständigen Eintauchen des Betätigungsnippels (3) ausreichenden Tiefe (t) vergrößert ist und die Einführöffnung (101) im Gehäuse (100) des Schaltgerätes (1) in einer Richtung (X4) senkrecht zur Bewegungsrichtung (Z3 bzw. Z1) des Schaltorgans (4) bzw. des Betätigungsnippels (3) um eine Ausnehmung (112) mit einer zum vollständigen Eintauchen des Betätigungsnippels (3) ausreichenden Tiefe (t) vergrößert ist, wodurch ein Bewegungsweg zum Eintauchen des Betätigungsnippels (3) in die Ausnehmung (212, 112) und zum parallelen Verschieben des Betätigungsnippels bis in die Einführöffnung (201, 101) des Hilfsschalters bzw. Schaltgerätes geschaffen ist, und die an den miteinander zu verbindenden Seiten der Gehäuse einander zugeordneten Führungsstege (229, 230; 226, 227) und Nuten (216, 221; 116, 121) parallel zur Erstreckungsrichtung (X4) der Ausnehmung (212, 112) als Schwalbenschwanzverbindung ausgebildet und der Ausnehmung (212, 112) der Gehäuse (200, 100) so zugeordnet ist, daß nach Eintauchen des Betätigungsnippels (3) eines Hilfsschalters (2) in eine der Ausnehmungen (212, 112) eines zu verbindenden Gehäuses (200, 100) die Führungsstege durch Verschieben der miteinander zu verbindenden Gehäuse parallel zu ihren Verbindungsseiten in die Nuten einführbar und bis zum Erreichen der Position des Eingriffes des Betätigungsnippels (3) mit dem Schaltorgan (4) verschiebbar sind.

2. Kombination nach Anspruch 1,
**dadurch gekennzeichnet**, daß die die Einführöffnung (201, 101) eines Gehäuses (200,100) vergrößernde Ausnehmung (212, 112) als Durchbrechung der Gehäusewand ausgeführt ist.

3. Kombination nach Anspruch 1,
**dadurch gekennzeichnet**, daß die die Einführöffnung (201, 101) eines Gehäuses (200, 100) vergrößernde Ausnehmung (212, 112) als in die Wandung des Gehäuses eingeformter Kanal ausgebildet ist.

4. Kombination nach einem der Ansprüche 1 bis 3,
**dadurch gekennzeichnet**, daß die Hilfsschalter auf der Seite des Gehäuses, wo der Betätigungsnippel (3) herausragt, randseitig mit einer angeformten in einer Durchbrechung (236) der Gehäusewandung federnden Rastzunge (231) ausgestattet sind, die in eine entsprechend am Gehäuse des Schaltgerätes oder auf der gegenüberliegenden Seite des Hilfsschalters ausgebildete Rastnut (125, 225) bei Erreichen der Eingriffsposition des Betätigungsnippels (3) bei Verbinden zweier Gehäuse einrastbar ist.

5. Kombination nach Anspruch 4,
**dadurch gekennzeichnet**, daß der Rastnut (125, 225) am Gehäuse des Schaltgerätes (1) bzw. des Hilfsschalters (2) in Einschubrichtung vorangehend eine Ausnehmung (123) mit Einführkeil (124) bzw. Einführschräge (224) ausgehend vom Gehäuserand (200) zum Aufnehmen und Eindrücken der Rastzunge (231) am Hilfsschalter ausgebildet ist.

6. Kombination nach einem der Ansprüche 1 bis 5,
**dadurch gekennzeichnet**, daß die Gehäuse der Hilfsschalter mit einer Kodierung ausgerüstet sind, die als vorstehende Stege (217, 217a) im Bereich der Schwalbenschwanzverbindung angeordnet sind.

## Claims

1. Combination of auxiliary switches (2) with each other, or of an auxiliary switch (2) with an electromagnetic device (1), which auxiliary switches are constructed in order to connect detachably the auxiliary switches to each other side by side, and/or to the electromagnetic switching device, with the auxiliary switches (2) having a housing (200) having a side which is constructed as a connecting side to an auxiliary switch or to an electromagnetic device and has an actuating nipple (3) which projects out of the housing (200) of the auxiliary switch (2), and the side of the housing of the auxiliary switch (2) that is parallel to the connecting side being constructed as a mounting side for connecting the connecting side of a further auxiliary switch (2), and with the housing (100) of the switching device (1) being provided, on two sides which are arranged opposite each other and parallel to each other, in a mirror-inverted arrangement as joining sides for connecting the connecting side of the auxiliary switches (2), and with it being possible for the actuating nipple (3) of the auxiliary switch (2) to be brought into engagement with a movable switching element (4) of the auxiliary switch (2) or switching device (1) through an entrance opening (201) in the housing (200) of the auxiliary switch (2) which is to be connected, or through an entrance opening (101) in the housing (100) of the switching device (1), and a locking of the housing of the auxiliary switch and the housing of the switching device, which housings are to be connected to each other, being provided by means of grooves and webs constructed on the housing of the auxiliary switch and on the housing of the switching device by shifting the housings (200, 100), which are to be connected to each other, in parallel with their connecting sides, mounting sides and joining sides, **characterised in that**, in a direction (X4) which is perpendicular with respect to the direction of movement (Z3) of the switching element (4) of the switching device (1) and with respect to the direction of movement (Z1) of the actuating nipple (3) of the auxiliary switch (2), the entrance opening (201) in the housing of the auxiliary switches (2) for the actuating nipple (3) of an auxiliary switch (2) to be connected is enlarged by a recess (212) which extends up to the lateral edge and has a depth (t) which is sufficient for the actuating nipple (3) to plunge completely thereinto, and in a direction (X4) which is perpendicular with respect to the direction of movement (Z3) of the switching element (4) and with respect to the direction of movement (Z1) of the actuating nipple (3), the entrance opening (101) in the housing (100) of the switching device (1) is enlarged by a recess (112) having a depth (t) which is sufficient for the actuating nipple (3) to plunge completely thereinto, as a result of which a movement path is created for the actuating nipple (3) to plunge into the recess (212, 112) and for shifting in a parallel manner the actuating nipple into the entrance opening (201, 101) of the auxiliary switch and switching device respectively, and the guide webs (229, 230; 226, 227) and grooves (216, 221; 116, 121), which are allocated to each other on the sides of the housings that are to be connected to each other, are constructed as a dovetail joint in a manner such that they are parallel to the direction (X4) in which the recess (212, 112) extends, and are allocated to the recess (212, 112) of the housings (200, 100) in such a way that after the actuating nipple (3) of an auxiliary switch (2) has been immersed into one of the recesses (212, 112) of a housing (200, 100) to be connected, the guide webs can be inserted into the grooves by shifting the housings, which are to be connected to each other, parallel to their joining sides, and said guide webs can be shifted until the position of engagement of the actuating nipple (3) with the switching element (4) is achieved.

2. Combination according to claim 1, characterised in that the recess (212, 112) which enlarges the entrance opening (201, 101) of a housing (200, 100) is constructed as an opening of the housing wall.

3. Combination according to claim 1, characterised in that the recess (212, 112) which enlarges the entrance opening (201, 101) of a housing (200, 100) is constructed as a channel formed in the wall of the housing.

4. Combination according to one of the claims 1 to 3, characterised in that the auxiliary switches on the side of the housing where the actuating nipple (3) projects, are provided, on the edge side, with a spring-mounted locking tongue (231) which is preformed in an opening (236) of the housing wall and can lock in a locking groove (125, 225), formed in a corresponding manner on the housing of the switching device or on the opposite side of the auxiliary switch, when the engagement position of the actuating nipple (3) is reached during the connection of two housings.

5. Combination according to claim 4, characterised in that preceding, in terms of the direction of pushing in, the locking groove (125, 225) on the housing of the switching device (1) or of the auxiliary switch (2), there is constructed on the auxiliary switch a recess (123) having an insertion wedge (124) or insertion slope (224) starting from the edge of the housing (200) in order to receive and push in the locking tongue (231).

6. Combination according to one of the claims 1 to 5, characterised in that the housings of the auxiliary switches are provided with a coding arranged as protruding webs (217, 217a) in the region of the dovetail joint.

## Revendications

1. Combinaison d'interrupteurs auxiliaires (2) entre eux ou d'interrupteurs auxiliaires (2) avec un appareil électromagnétique (1) construits de façon à permettre de relier côte à côte de manière amovible les interrupteurs auxiliaires entre eux et/ou avec l'appareil électromagnétique, les interrupteurs auxiliaires (2) présentant un boîtier (200) possédant, sur un interrupteur auxiliaire ou un appareil électromagnétique, une face construite comme face de raccordement comportant une pièce d'actionnement (3) dépassant du boîtier (200) de l'interrupteur auxiliaire (2) et la face du boîtier de l'interrupteur auxiliaire (2) parallèle à la face de raccordement étant construite comme face d'extension pour le raccordement d'un interrupteur auxiliaire (2) supplémentaire au moyen de la face de raccordement de ce dernier, et deux côtés opposés, parallèles l'un à l'autre, du boîtier (100) de l'appareil de coupure (1) étant construits comme faces de liaison à symétrie miroir pour le raccordement des interrupteurs auxiliaires (2) par leurs faces de raccordement, et la pièce d'actionnement (3) de l'interrupteur auxiliaire (2) pouvant être mise en prise avec un organe de commande mobile (4) de l'interrupteur auxiliaire (2) ou de l'appareil de coupure (1) à travers une ouverture d'introduction (201) dans le boîtier (200) de l'interrupteur auxiliaire (2) à raccorder ou une ouverture d'introduction (101) dans le boîtier (100) de l'appareil de coupure (1) et un verrouillage des boîtiers de l'interrupteur auxiliaire et de l'appareil de coupure à relier entre eux étant prévu à l'aide de rainures et de nervures formées dans les boîtiers de l'interrupteur auxiliaire et de l'appareil de coupure, par glissement des boîtiers (200, 100) à relier entre eux parallèlement à leurs faces de liaison, d'extension et de liaison, caractérisée en ce que l'ouverture d'introduction (201) dans le boîtier (200) de l'interrupteur auxiliaire (2) est, dans une direction (X4) perpendiculaire à la direction de déplacement (Z3 ou Z1) de l'organe de commutation (4) de l'appareil de coupure (1) ou de la pièce d'actionnement (3) de l'interrupteur auxiliaire (2), agrandie pour la pièce d'actionnement (3) d'un interrupteur auxiliaire (2) à raccorder d'un évidement (212) s'étendant jusqu'à l'arête latérale, d'une profondeur (t) suffisante pour permettre l'introduction complète de la pièce d'actionnement (3) et en que l'ouverture d'introduction (101) dans le boîtier (100) de l'appareil de coupure (1) est agrandi dans une direction (X4) perpendiculaire à la direction de déplacement (Z3 ou Z1) de l'organe de commutation (4) ou de la pièce d'actionnement (3) d'un évidement (112) d'une profondeur (t) suffisante pour permettre l'introduction complète de la pièce d'actionnement (3), ce qui crée un chemin de déplacement pour l'introduction de la pièce d'actionnement (3) dans l'évidement (212, 112) et pour le glissement parallèle de la pièce d'actionnement (3) jusque dans l'ouverture d'introduction (201, 101) de l'interrupteur auxiliaire ou de l'appareil de coupure, et en ce que les nervures de guidage (229, 230 ; 226, 227) et rainures (216, 221 ; 116, 121) parallèles à la direction d'extension (X4) de l'évidement (212, 112), disposées sur les faces correspondantes des boîtiers à relier, sont réalisées en forme de queue d'aronde et disposées de telle manière par rapport à l'évidement (212, 112) des boîtiers (200, 100) qu'après introduction de la pièce d'actionnement (3) d'un interrupteur auxiliaire (2) dans un des évidements (212, 112) d'un des boîtiers (200, 100) à relier, on peut introduire les nervures de guidages dans les rainures en faisant glisser les boîtiers à relier entre eux parallèlement à leurs faces de raccordement et les faire glisser jusqu'à la position où la pièce d'actionnement (3) est en prise avec l'organe de commutation (4).

2. Combinaison suivant la revendication 1, caractérisée en ce que l'évidement (212, 112) élargissant l'ouverture d'introduction (201, 101) d'un boîtier (200, 100) est réalisé sous forme de découpe dans la paroi du boîtier.

3. Combinaison suivant la revendication 1, caractérisée en ce que l'évidement (212, 112) élargissant l'ouverture d'introduction (201, 101) d'un boîtier (200, 100) est réalisé sous forme d'un canal formé dans la paroi du boîtier.

4. Combinaison suivant l'une des revendications 1 à 3, caractérisée en ce que les interrupteurs auxiliaires sur la face du boîtier de laquelle dépasse la pièce d'actionnement (3) sont équipés sur les bords d'une languette de verrouillage (231) moulée faisant ressort dans une découpe (236) de la paroi du boîtier, qui peut s'encliqueter dans une rainure d'encliquetage (125, 225) correspondante prévue sur le boîtier de l'appareil de coupure ou sur la face opposée de l'interrupteur auxiliaire lorsqu'on atteint la position d'entrée en prise de la pièce d'actionnement (3) lors du raccordement des deux boîtiers.

5. Combinaison suivant la revendication 4, caractérisée en ce que, lorsqu'on avance dans la direction d'introduction, un évidement (123) avec élargissement d'introduction (124) ou pente d'introduction (224) partant du bord du boîtier (200) et destiné à recevoir et enfoncer la languette d'encliquetage (231) de l'interrupteur auxiliaire précède la rainure d'encliquetage (125, 225) sur le boîtier de l'appareil de coupure (1) ou de l'interrupteur auxiliaire (2).

6. Combinaison suivant l'une des revendications 1 à 5, caractérisée en ce que les boîtiers des interrupteurs auxiliaires sont pourvus d'un codage, qui est disposé sous forme de nervures (217, 217a) dépassant dans la zone de l'assemblage en queue d'aronde.
